# EUROPÄISCHE PATENTANMELDUNG

(11) **EP 1 429 260 A1**
(43) Veröffentlichungstag der Anmeldung: **16.06.2004**
(21) Anmeldenummer: 03023497.5
(22) Anmeldetag: 18.10.2003
(51) Int. Cl.: G06F 17/30

(54) **Elektronisches Telefonbuch mit Audio- und Grafikdaten**

(30) Priorität: 12.12.2002 DE 10258033
(71) Anmelder: Deutsche Telekom AG, 53113 Bonn (DE)
(72) Erfinder: Bindel, Frank, 54123 Königswinter (DE); Brackmann, Ludwig, Dipl.-Ing., 53225 Bonn (DE)

(57) **Zusammenfassung**

Verfahren zum Auffinden der Netzkennung eines über ein Datenleitungsnetz, insbesondere ein Telephonnetz, erreichbaren Netzanschlusses, der einem Teilnehmer, beispielsweise einer Person oder einer Personengruppe zugeordnet ist, wobei der Teilnehmer mit seiner Netzkennung und weiteren ihm zugeordneten Daten in einer Teilnehmerdatenbank repräsentiert ist, wobei in der Teilnehmerdatenbank mittels einer von einem Computerprogramm realisierten Suchfunktion (Suchmaschine) unter Vorgabe von Suchkriterien, beispielsweise dem Namen des Teilnehmers, nach der Netzkennung des gewünschten Teilnehmers gesucht wird, die dem Suchenden nach dem Auffinden dargeboten wird, und wobei die weiteren Daten Grafikdaten oder akustische Repräsentationen enthalten, die von der Suchmaschine in die Suche einbezogen werden.

## Beschreibung

Die vorliegende Erfindung betrifft ein Verfahren zum Auffinden der Netzkennung eines über ein Datenleitungsnetz, insbesondere ein Telephonnetz, erreichbaren Netzanschlusses, der einem Teilnehmer, beispielsweise einer Person oder einer Personengruppe zugeordnet ist, wobei der Teilnehmer mit seiner Netzkennung und weiteren ihm zugeordneten Daten in einer Teilnehmerdatenbank repräsentiert ist, wobei in der Teilnehmerdatenbank mit einer von einem Computerprogramm realisierten Suchfunktion (Suchmaschine) unter Vorgabe von Suchkriterien, beispielsweise dem Namen des Teilnehmers, nach der Netzkennung des gewünschten Teilnehmers gesucht wird, die dem Suchenden nach dem Auffinden dargeboten wird. Die Erfindung betrifft gleichsam ein elektronisches Telephonbuch und ein Telephon, insbesondere zur Umsetzung des Verfahrens.

Derartige Verfahren sind hinlänglich bekannt und werden als Computerprogramme mit zugehöriger Datenbank beispielsweise auf Compakt Disks oder über das Internet angeboten. In Verbindung mit einem Computer bilden sie damit ein elektronisches Telephonbuch. Wegen der enormen Größe der Datenbank sind derartige Programme jedoch bislang noch nicht auf den Telephongeräten selber realisierbar. Die bekannten Adressbuchfunktionen der Telephongeräte arbeiten zwar nach demselben Prinzip, es handelt sich jedoch bei der vom Anwender selber vorgegebenen Adressenliste um eine Datenbank stark reduzierter Größe. Die Handhabung der Funktion ist derart, dass der Suchende den ihm bekannten Namen des gewünschten Teilnehmers vorgibt und das Programm in der Liste der gespeicherten Namen sucht. Nachteilig an den bekannten Verfahren ist, dass der Suchende ein recht genaues Wissen vom Namen und der Anschrift des von ihm gewünschten Gesprächspartners haben muss. Ohne den exakten Namen oder ohne die genaue Adresse lässt sich kein Teilnehmer auffinden.

Aufgabe der Erfindung ist es nunmehr, ein derartiges Verfahren zur Suche von Netzkennungen zu schaffen, das sich einfach und mit kostengünstigen Mitteln umsetzen lässt und das trotz vergleichsweise unbestimmter Vorgaben dennoch ein zuverlässiges und komfortables Auffinden von Teilnehmern in einer Teilnehmerdatenbank ermöglicht. Zudem ist es die Aufgabe der Erfindung ein elektronisches Telephonbuch und ein Telephon zu schaffen, mit dem sich das erfindungsgemäße Verfahren umsetzen lässt.

Diese Aufgaben werden durch das Verfahren mit den kennzeichnenden Merkmalen des Anspruch 1, das Telephonbuch nach Anspruch 10 und das Telephon nach Anspruch 11 gelöst.

Der wesentliche Gedanke der Erfindung liegt darin, die Teilnehmerdatei um Bilder oder Sprachsequenzen zu erweitern und nach deren Inhalten zu suchen. Zwar werden auch heute schon Bilder, wie beispielsweise Passbilder, den Einträgen in Telephonbüchern zugeordnet, eine Einbeziehung dieser Bilder in die Suche ist jedoch nicht möglich. Erfindungsgemäß könnten beispielsweise jedem Eintrag in einem Telephonbuch das Portrait des Teilnehmers, ein Bild von dessen Privatoder Bürohaus oder eine Sprachnachricht zugeordnet sein. Als Grafikdaten sind demnach in dieser vorteilhaften Ausführungsform ein Bild mit einem Portrait des Teilnehmers oder ein Bild aus dem Umfeld des Teilnehmers, beispielsweise ein Bild des dem Teilnehmer zuzuordnenden Gebäudes, vorzusehen. Wie dargelegt, sind diese Bilder anhand der vom Suchenden vorgebbaren Charakteristika auffindbar. Ein Teilnehmer kann somit über diese persönlichen Merkmale gesucht werden. Dabei helfen Sprach- oder Bilderkennungstechnologien, die um die herkömmliche Suchfunktionen erweitert werden. Die Datenbanken können mit diesen Mitteln nach akustischen und/oder optischen Merkmalen durchsucht werden.

Ein Vorteil der Erfindung liegt darin, dass die Kompetenz der Suchfunktionen sich um zwei Dimensionen, nämlich die optischen und akustischen Inhalte, vergrößert. Die Suchenden können sich nunmehr auch ohne ein genaues Wissen um den Namen und die Adresse des Gesuchten nur mit Vorgabe von Merkmalen an die Datenbank wenden, die ihnen aus anderer Quelle bekannt sind. Sie können die Vorgabe manuell oder, in einer vorteilhaften Form, mit gesprochen Worten vornehmen. Erfindungsgemäß führt beispielsweise eine Anfrage nach der Telephonnummer einer Bäckerei, die in einem Jugendstil-Eckhaus im Norden der Stadt untergebracht ist, zum Erfolg, da der Bäcker mit einem Bild seiner Bäckerei in die Datenbank repräsentiert ist.

In der Datenbank sind als akustische Inhalte beispielsweise Sprachsequenzen von Teilnehmern gespeichert. Mit Spracherkennungsprogrammen ist es möglich, aus diesen Sprachsequenzen Eigenschaften der Teilnehmer (weiblich/männlich oder jung/alt) zu extrahieren, über die sich der Teilnehmer finden lässt.

In einer einfachen Form werden die Sprach- oder Bildinformation bei der Suche mit vorgegebenen Mustern verglichen. In einer anderen besonders vorteilhaften Ausführungsform, sind sowohl Sprach- als auch Bilderkennungsprogramme in der Lage, die in der Datenbank gespeicherte Information mittels künstlicher Intelligenz inhaltlich zu erfassen, um so die Datensätze des Telephonbuches entsprechend zu durchsuchen. Es ist also nicht erforderlich, den Inhalt eines Bildes oder eines Sprachbefehls zu kategorisieren oder zu erläutern. Statt dessen ist die "intelligente" Software in der Lage, die inhaltliche Interpretation der Information selber vorzunehmen. Vorteilhafter Weise kann der Suchende mit der sprachlichen Vorgabe nach optischen Suchmerkmalen, wie beispielsweise der Haarfarbe oder nach auffälligen Kleidungsstücken, suchen. Als Ergebnis erhält er eine Auflistung aller Telephonbucheinträge, die den vorgegebenen Merkmalen entsprechen.

Da der Suchende unterschiedliche und relativ ungenaue Suchkriterien vorgeben kann, mit denen die Suche oft zu keinem eindeutigen Ergebnis führt, ist es von Vorteil, ihm nach Vorgabe eines die graphische Darstellung charakterisierenden Suchbegriffes, beispielsweise der Haarfarbe oder einer Gebäudecharakteristik, die Möglichkeit zu geben, eines der als Bilder dargebotenen Ergebnisse per Befehl zu bestätigen. Dabei kann es ab einer vorgebbaren Trefferquote vorteilhaft sein, den Suchenden um eine erneute und etwas präzisere Vorgabe von Suchkriterien zu bitten.

Es ist weiterhin vorteilhaft und besonders kundenfreundlich, wenn nach dem Auffinden des gewünschten Teilnehmers zusätzlich zu dessen Netzkennung auch die ergänzende Information, die dem Eintrag zugeordnet ist, auszugeben. So könnte der Teilnehmer beispielsweise mit einer Art Homepage im Telephonbuch präsent sein, die über den Bildschirm des Telekommunikationsendgerätes angezeigt wird. Es ist auch vorteilhaft, wenn dem Nutzer die Möglichkeit eröffnet wird, sich direkt mit dem aufgefundenen Gesprächspartner verbinden zu lassen.

Wie an vorangehender Stelle schon dargelegt, gibt es verschiedene Möglichkeiten innerhalb der sprachlichen oder graphischen Daten zu suchen. So ist es einerseits möglich, dass jeweils einer Sprachsequenz oder einem als Grafik repräsentierten Bild eine Textdatei mit einer Beschreibung des Inhaltes der Daten zugeordnet ist. Die Suchmaschine identifiziert dann ein Bild oder eine Sprachsequenz durch Auffinden von vorgegebenen Suchbegriffen innerhalb der Textdatei. In einer anderen vorteilhaften Form identifiziert die Suchmaschine ein Bild oder eine Sprachsequenz durch Interpretation des Inhalts. Die Interpretation der Daten wird dabei von einer intelligenten Sprach- oder Bilderkennungsfunktion realisiert.

Die Erfindung umfasst neben dem Verfahren auch Vorrichtungen, mit denen sich das Verfahren umsetzen lässt. Dazu zählt ein elektronisches Telephonbuch, das einerseits eine Datenbank umfasst, die neben der Netzkennung weitere einem Teilnehmer zugeordnete Daten enthält. Das Telephonbuch umfasst zudem eine Suchmaschine, mit der eine Netzkennung eines gewünschten Teilnehmers innerhalb der Datenbank auffindbar ist, und ein Endgerät, beispielsweise ein (Mobil)-Telephon oder ein PDA, mit dem ein Zugang zur Datenbank herstellbar ist und mit dem der Suchmaschine Suchbegriffe vorgebbar sind. Letztendlich ist das Telephonbuch auf dem Endgerät realisiert. Wie dargelegt enthält die Datenbank Sprach- und/oder Grafikdaten, insbesondere Bilder, die mit der Suchmaschine findbar sind. Als weitere Vorrichtung zur Umsetzung des Verfahrens sei ein Telephon, insbesondere ein Mobiltelephon, mit einer Suchfunktion genannt, die auf ein elektronisches Telephonbuch zugreift. Dieses hat ein Ausgabemittel, das nach erfolgreicher Suche die dem gewünschten Teilnehmer zugeordneten Daten (Bild oder Sprachsequenz) ausgibt.

## Patentansprüche

1. Verfahren zum Auffinden der Netzkennung eines über ein Datenleitungsnetz, insbesondere ein Telephonnetz, erreichbaren Netzanschlusses, der einem Teilnehmer, beispielsweise einer Person oder einer Personengruppe zugeordnet ist, wobei der Teilnehmer mit seiner Netzkennung und weiteren ihm zugeordneten Daten in einer Teilnehmerdatenbank repräsentiert ist, wobei in der Teilnehmerdatenbank mittels einer von einem Computerprogramm realisierten Suchfunktion (Suchmaschine) unter Vorgabe von Suchkriterien, beispielsweise dem Namen des Teilnehmers, nach der Netzkennung des gewünschten Teilnehmers gesucht wird, die dem Suchenden nach dem Auffinden dargeboten wird,
**dadurch gekennzeichnet,**
**dass** die weiteren Daten Grafikdaten oder akustische Repräsentationen enthalten, die von der Suchmaschine in die Suche einbezogen werden.

2. Verfahren nach Anspruch 1,
**dadurch gekennzeichnet, dass** die Grafikdaten ein Bild mit einem Portrait des Teilnehmers aufweisen, das anhand vorgebbarer Charakteristika auffindbar ist.

3. Verfahren nach Anspruch 1 oder 2,
**dadurch gekennzeichnet**, dassdieGrafikdateneinBildaus dem Umfeld des Teilnehmers, beispielsweise ein Bild des dem Teilnehmer zuzuordnenden Gebäudes, aufweisen, wobei das Bild anhand vorgebbarer Charakteristika auffindbar ist.

4. Verfahren nach einem der vorherigen Ansprüche,
**dadurch gekennzeichnet, dass** der Suchende einen die graphische Darstellung charakterisierenden Suchbegriff, beispielsweise die Haarfarbe oder eine Gebäudecharakteristik, vorgibt und dass eines oder mehrere Bilder als Ergebnis der Suche dargeboten werden, wobei dem Suchenden die Möglichkeit zur Bestätigung gegeben ist.

5. Verfahren nach einem der vorherigen Ansprüche,
**dadurch gekennzeichnet, dass** nach dem Auffinden des gewünschten Teilnehmers neben der Netzkennung noch weitere der vorhandenen Information ausgegeben wird und/oder eine Verbindung zum gewünschten Teilnehmer hergestellt wird.

6. Verfahren nach einem der vorherigen Ansprüche,
**dadurch gekennzeichnet, dass** jeweils einem als Grafik repräsentierten Bild eine Textdatei enthaltend eine Beschreibung des Inhaltes zugeordnet ist, wobei die Suchmaschine ein Bild durch Auffinden von vorgegebenen Suchbegriffen in der Textdatei identifiziert.

7. Verfahren nach einem der vorherigen Ansprüche,
**dadurch gekennzeichnet, dass** die Suchmaschine ein Bild durch Interpretation seines Inhalts identifiziert, wobei die Interpretation von einer intelligenten Bilderkennungsfunktion realisiert wird.

8. Verfahren nach einem der vorherigen Ansprüche,
**dadurch gekennzeichnet, dass** die Suchbegriffe über die menschliche Sprache vorgegeben werden.

9. Verfahren nach einem der vorherigen Ansprüche,
**dadurch gekennzeichnet, dass** die akustische Repräsentation eine Sprachsequenz des Teilnehmers aufweist, aus der mittels eines Programmes zur Spracherkennung Eigenschaften des Teilnehmers extrahiert werden.

10. Elektronisches Telephonbuch umfassend eine Datenbank, die neben der Netzkennung weitere einem Teilnehmer zugeordnete Daten enthält, umfassend eine Suchmaschine, mit der eine Netzkennung eines gewünschten Teilnehmers innerhalb der Datenbank auffindbar ist, und umfassend ein Endgerät, mit dem ein Zugang zur Datenbank herstellbar ist und mit dem der Suchmaschine Suchbegriffe vorgebbar sind,
**dadurch gekennzeichnet, dass** die Datenbank Sprachund/oder Grafikdaten, insbesondere Bilder, enthält, die mit der Suchmaschine findbar sind.

11. Telephon, insbesondere Mobiltelephon, mit einer Suchfunktion, die auf ein elektronisches Telephonbuch nach Anspruch 9 zugreift, **gekennzeichnet durch** ein Ausgabemittel, das nach erfolgreicher Suche die dem gewünschten Teilnehmer zugeordneten Daten, umfassend ein Bild und/oder eine Sprachsequenz, ausgibt.
